Europäisches Patentamt

European Patent Office

Office européen des brevets

(11) Publication number : **0 472 383 A2**

# EUROPEAN PATENT APPLICATION

(21) Application number : **91307596.6**

(51) Int. Cl.⁵ : **H04J 14/08**

(22) Date of filing : **16.08.91**

(30) Priority : **22.08.90 GB 9018443**

(43) Date of publication of application :
**26.02.92 Bulletin 92/09**

(84) Designated Contracting States :
**AT BE CH DE DK ES FR GR IT LI LU NL SE**

(71) Applicant : **GEC-MARCONI LIMITED**
**The Grove, Warren Lane**
**Stanmore, Middlesex HA7 4LY (GB)**

(72) Inventor : **Hollis, Tony**
**Eastcombe Cottage, Batcombe**
**Shepton Mallet, Somerset BA4 6AL (GB)**

(74) Representative : **Goddin, Jeremy Robert et al**
**GEC Patent Department, GEC Marconi**
**Limited, West Hanningfield Road**
**Great Baddow, Chelmsford, Essex CM2 8HN**
**(GB)**

(54) Apparatus and method for demodulating multiplexed signals.

(57)    Angle modulated time-division multiplexed signals are demodulated prior to demultiplexing using a quadrature demodulator to demodulate digitised samples of the signal so as to produce a demodulated multiplexed signal.
    For each time slot of the multiplexed signal, the reference signal applied to the quadrature demodulator is determined by the value of the demodulated signal obtained in the corresponding time slot in the immediately-preceeding frame, this value being stored for use in the subsequent time slot. The demodulated multiplexed signals can be subsequently processed as required. A microprocessor may effect the demodulation. Phase or frequency modulation may be used.

EP 0 472 383 A2

Fig. 4.

This invention relates to an apparatus and a method for demodulating multiplexed signals, in particular arrangements for use with multiplexed fibre optic sensor arrays.

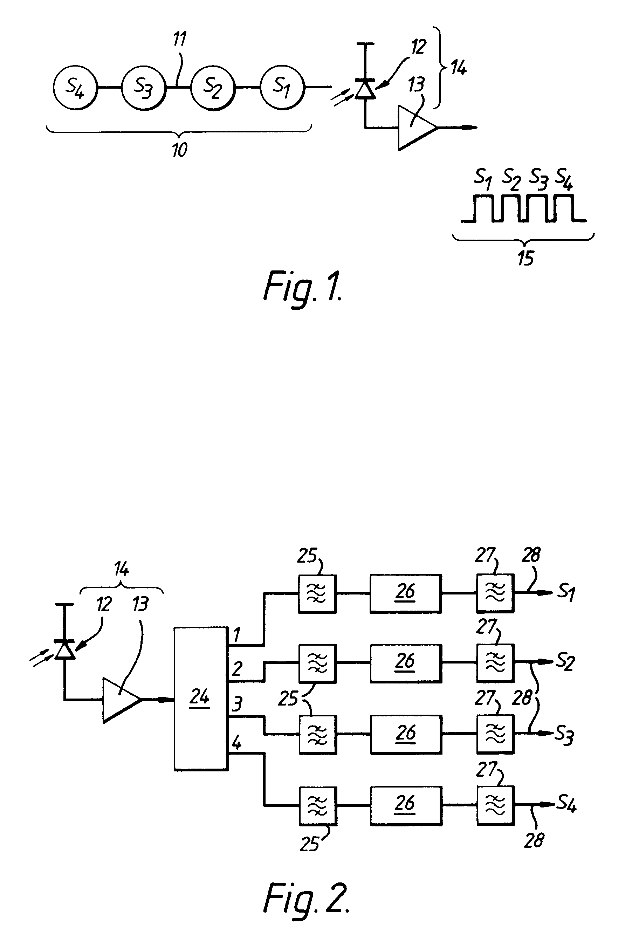

Multiplexed fibre optic sensor arrays are known for example from UK patent 2126820B. Such an optic sensor array 10 is shown in Figure 1 and comprises a plurality of sensors S1, S2, S3 and S4 disposed in series along a fibre light guide 11. Each of the sensors S1, S2, S3 and S4 comprises a length of the fibre light guide 11 bounded by discontinuities in the light guide. One end of the optic sensor array 10 is connected to a photodetector 12 to produce an output signal which is passed through an amplifier 13. The photodetector 12 and the amplifier 13 constitute an optical detector 14. Pairs of pulses are repetitively launched down the light guide, the sensor spacing and inter pulse spacings being such that, for each respective sensor, a portion of the first pulse of each pair reflected from the discontinuity at the far end of the sensor arrives at the optical detector 14 simultaneously with a portion of the second pulse of the pair reflected from the discontinuity at the near end of the sensor. As both pulses are produced from a coherent light source, the two reflected pulses heterodyne together in the optical detector 14. Only the first reflected pulse has traversed the length of the sensor, and in its passage through the sensor its phase is changed as a function of the physical properties e.g. length, of the sensor. These physical properties are perturbed by the parameter being sensed, thereby perturbing the change of phase (phase shift) by a corresponding amount. When the two reflected pulses, one being shifted in phase by the sensor, the other not, are heterodyned, a signal is produced containing phase modulation corresponding to the change of phase.

Reflection and heterodyning take place at progressively different times as the pulse pairs progress down the sensor array 10 and interact with the series of sensors S1, S2, S3 and S4, producing a sequence of phase modulated output pulses 15 at the output of the optical detector 14. By launching a number of pairs of pulses down the sensor array 10, a serial stream of pulses is received by the photo detector 12 which produces at its output a corresponding time-domain multiplexed data stream comprising bursts of phase modulated carrier 15. For example in an acoustic array the carrier might typically be 1 MHz and may be phase modulated at (say) 1 kHz by a 1 kHz signal incident on a given fibre sensor.

The resulting serial data stream comprising interleaved modulated pulses must now be demodulated. One known technique is shown in Figure 2, in which the data stream is first demultiplexed in demultiplexer 24 to produce respective outputs 1, 2, 3, 4, each comprising respective pulses of carrier carrying information about its respective sensor S1, S2, S3 and S4. These pulses of carrier are passed through respective filters 25, demodulators 26 and low pass filters 27 to produce signals S1, S2, S3 and S4 on respective output lines 28. The arrangement of Figure 2 is illustrated for four channels. For a larger number of channels this technique has the disadvantage that a correspondingly larger number of electronic circuits is required, since one demodulator 26 is needed for each channel.

Another problem is that it is often the case with such systems that the pulse of carrier is too short for conventional analogue demodulating techniques to operate satisfactory.

An additional problem peculiar to optical systems of the type described is that, as a consequence of the square law conversion characteristic of the photodetector 12, each pulse of carrier contains a d.c. component or a pedestal, resulting in d.c. terms arising from the optical heterodyning process. These d.c. terms are in general not constant but vary from pulse to pulse depending on the heterodyne efficiency within each pulse, thereby rendering the within-pulse demodulation process difficult to achieve.

A further problem is the presence of large amplitude, low frequency, unwanted signal components arising from static pressure and temperature variations. These unwanted components cause the phase modulation to pass through many cycles and thereby interfere with the operation of a straightforward phase demodulator.

The present invention seeks to provide an apparatus and a method which mitigates the disadvantages of the prior art.

According to a first aspect of the invention an apparatus, for demodulating a time-division multiplexed angle modulated input signal which consists of a repetitive sequence of frames each of which comprises a plurality of time slots with corresponding slots in each frame being allocated to corresponding information-carrying signals, includes:-

an analogue/digital converter provided to convert the input signal into a series of digital signals representing respective instantaneous magnitudes of the input signal,

a demodulator means having an input connection for receiving the series of digital signals and an output connection for transmitting an output signal comprising a series of demodulated signals,

the demodulator means including a reference signal means for generating a series of reference signals, and a feedback circuit interconnecting the output connection and the reference signal means, and

a storage means, for storing the demodulated output signal during a given time slot and for applying this stored signal to the reference signal means during a corresponding subsequent time slot of a subsequent frame, being positioned in the feed back circuit whereby the application of this stored signal to the reference signal means will determine the reference signal generated by the reference signal means during the corresponding subsequent time slot.

The demodulator means may include a quadrature demodulator means. The reference signal means may be arranged to generate respective sine and cosine signals for use by the quadrative demodulator means to effect demodulation.

The quadrature demodulator means may include a first path containing a first multiplier for multiplying the series of digital signals by the sine signal produced by the reference signal means to produce a first imtermediate signal, a second path containing a second multiplier for multiplying the series of digital signals by the cosine signal produced by the reference signal means to produce a second intermediate signal, a divider arranged to divide one of the first and second intermediate signals by the other intermediate signal to produce a third intermediate signal, and a further means arranged to modify the third intermediate signal to produce the output signal.

Each of said first and second paths may include a respective filter.

The modulation may be phase modulation, in which case demodulation may be effected by frequency demodulation followed by integration. Alternatively, phase demodulation may be performed directly.

The output signal may comprise a frequency demodulated representation of the input signal.

The output connection of the demodulator means may be connected to a high-pass filter and an integrator. The output signal from the demodulator means may be filtered by the high-pass filter and the filtered output signal may then be integrated by the integrator to produce a further demodulated output signal.

The feedback circuit may include a low-pass filter arranged between the output connection and the means for storing the demodulated output signal.

The demodulator means may comprise a microprocessor to allow at least some of the operations to be carried out in software.

Alternatively, the first and second intermediate signals may be filtered before they are divided to produce the third intermediate signal.

By demodulating the multiplexed signal before it is demultiplexed, arrangements and methods in accordance with the invention are considerably less complex than prior art arrangements, especially where large numbers of channels are multiplexed together.

According to a second aspect of the invention a method of demodulating a time-division multiplexed angle modulated input signal which consists of a repetitive sequence of frames each of which comprises a plurality of time slots with corresponding slots in each frame being allocated to corresponding information-carrying signals, includes:-

repetitively sampling the input signal to produce a series of digital signals representing respective instantaneous magnitudes of the input signal,

using a series of reference signals for demodulating the series of digital signals to produce an output signal comprising a series of demodulated signals,

applying the output signal to feed back means,

storing the demodulated signals in the feedback means, and

using the stored demodulated signals produced during a given time slot to produce the reference signal required for demodulation during the corresponding subsequent time slot.

The method may also include demodulating the series of digital signals by quadrature demodulation and producing the series of reference signals as respective sine and cosine signals.

The quadrature demodulation may be performed by:-

multiplying the series of digital signals by the sine signal to produce a first intermediate signal,

multiplying the series of digital signals by the cosine signal to produce a second intermediate signal,

dividing one of the first and second intermediate signals by the other of the first and second intermediate signals to produce a third intermediate signal, and

modifying the third intermediate signal to produce the output signal.

The first and second intermediate signals may be filtered before they are divided to produce the third intermediate signal. The output signal may be high pass filtered, and the filtered output signal be integrated to produce a further demodulated signal. The demodulated series of digital signals may be low pass filtered prior to being stored in the feed back means.

The invention will now be described with reference to the drawings in which;

Figure 1 shows a prior art fibre optic sensor array;

Figure 2 shows a prior art demodulator for use with the arrangement of Figure 1;

Figure 3 is a block diagram of a first embodiment of the invention;

Figure 4 is a block diagram of part of Figure 3 in more detail, and

Figure 5 is a block diagram of a second embodiment of the invention.

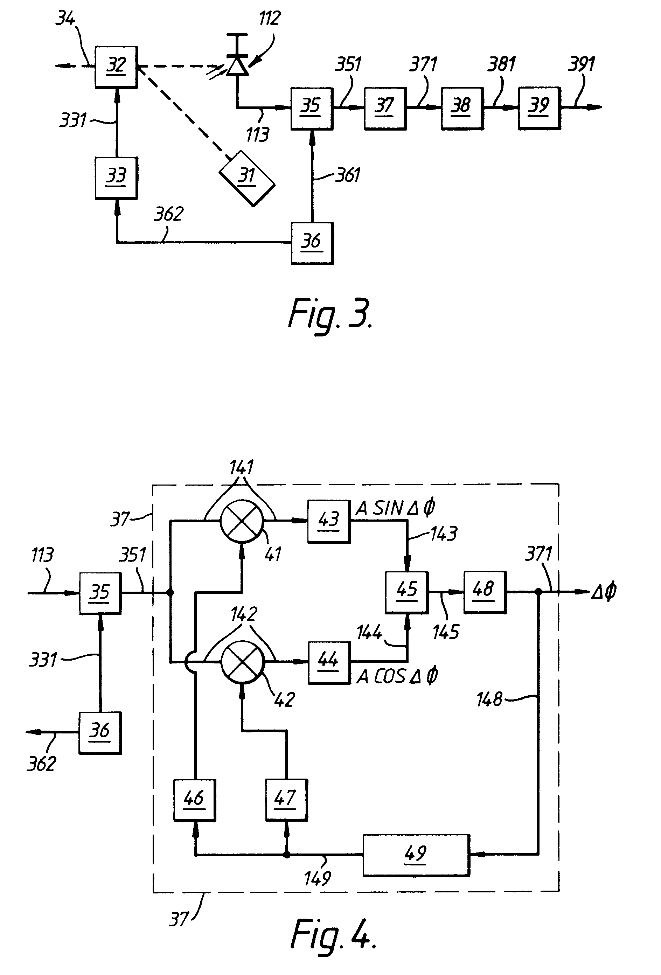

In Figure 3, light from a laser 31 impinges on a Bragg cell 32 to which a series of pairs of electrical pulses are applied from a radio frequency pulse generator 33 through connection 331. As a consequence, a series of pairs of light pulses are launched into a light guide 34 coupled to an unshown sensor array which may be exactly the same as the optic sensor array 10 which has already been described with reference to Figure 1. Light pulses emerging from the sensor array pass via the Bragg cell 32 onto a photodetector 12 in which pairs of pulses heterodyne together to produce corresponding phase modulated electrical signals which are applied by a connection 113 to an analogue/digital converter 35. The converter 35 and pulse generator 33 are controlled by a timing source 36 through respective connections 361 and 362. The converter 35 produces digital output signals which are fed by a connection 351 into a frequency demodulator 37 of which the output signals applied to a connection 371 are a frequency demodulation of the phase modulated signal. To effect phase demodulation the frequency demodulated output signal at 371 is filtered by a high pass filter 38 and this filtered output signal is then transmitted by a connection 381 to an integrator 39 to produce a demodulated multiplexed output signal in an output line 391 which can then be demultiplexed or otherwise processed by any convenient technique according to system requirements.

Figure 4 shows a more detailed block diagram of one way in which the frequency demodulator 37 may be implemented. The analogue/digital converter 35 and timing circuit 36 are as shown in Figure 3, while the rest of Figure 4 corresponds to the frequency demodulator 37 of Figure 3. A digital pulse stream from the converter 35 is applied through the connection 351 to a quadrature demodulator which comprises a first path 141 in which the pulse signal is multiplied by a sine function from sine replica generator 46 in a multiplier 41, the product of the multiplication being passed through a filter 43 to produce a signal A sin $\Delta\varnothing$ in connector 143. The quadrature demodulator also comprises a second path 142 in which the digital signal from connection 351 is multiplied by a cosine signal from cosine replica generator 47, the product being passed through a filter 44 to produce a signal A cos $\Delta\varnothing$ in connector 144. The signal A sin $\Delta\varnothing$ is divided by A cos $\Delta\varnothing$ in a divider 45 to obtain a signal tan $\Delta\varnothing$ which is passed through a connector 145 to an arctan device 48 to produce a signal $\Delta\varnothing$ in the connector 371 which is applied to the filter 38 are already described with reference to Figure 3. This signal $\Delta\varnothing$ represents the frequency demodulated version of the original angle modulated signal. Accordingly, if the original modulation was frequency modulation, then this would represent the original signal directly. In the present embodiment phase modulation is employed, and accordingly this signal $\Delta\varnothing$ has to be demodulated further to obtain the baseband output signal as described previously with reference to Figure 3. Of course if the original modulation were frequency modulation, then the signal $\Delta\varnothing$ itself would comprise the baseband output signal.

The signal $\Delta\varnothing$ is also applied through connection 148 to a replica position feed back arrangement 49 which is connected by a connection 149 to the generators 46 and 47. The replica position feed back arrangement 49 comprises an arrangement for storing the value of the signal $\Delta\varnothing$ produced during each time slot of a time frame, and uses this stored value to determine the signal produced by the sine replica and cosine replica generators 46, 47 during the corresponding time slot of the next time frame. Thus each time slot of a frame has its sine and cosine replica signals determined by the previous value of the signal which was present in the corresponding time slot of the previous time frame. This allows the change in parameters from frame to frame of the signal present in any given time slot to be accurately determined, as the signal in any given time slot is always being compared with the frequency/phase of the signal which was present in the corresponding time slot of the immediately preceding frame.

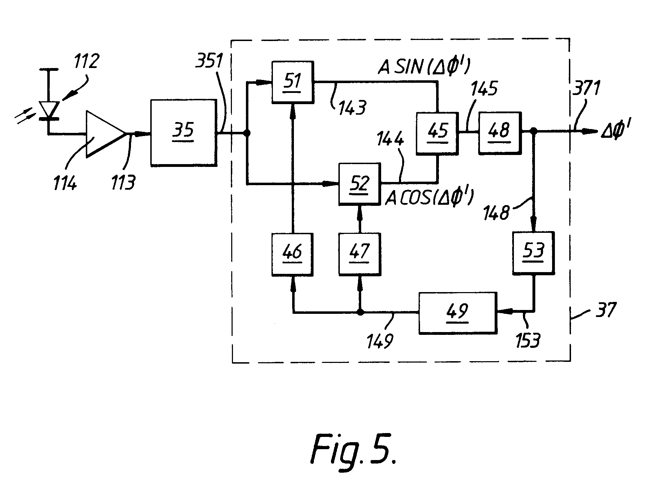

Figure 5 illustrates an alternative arrangement to that just described with reference to Figures 3 and 4. As in the case of Figure 3, input signals from a photodetector 112 are applied to an analogue/digital converter 35 to provide digitised signals in connection 351. As shown, an amplifier 114 may be arranged between the photodetector 112 and the converter 35. The digitised signals through the connection 351 are then multiplied by sine and cosine signals from sine replica and cosine replica generators 46, 47, as taught by Figure 4, but the multiplication is now effected in respective multiplier accumulators 51, 52 to provide signals A sin $\Delta\varnothing'$ and A cos $\Delta\varnothing'$ respectively in connections 143 and 144 as before. The signal A sin $\Delta\varnothing'$ is divided by a signal A cos $\Delta\varnothing'$ in the divider 45 and the resultant signal is processed by the arctan device 48 to produce a signal $\Delta\varnothing'$ in connections 148 and 371. The signal $\Delta\varnothing'$ in connection 148 is now low pass filtered in filter 53 before being applied by connector 153 to the replica position feed back arrangement 49 which stores the value of the filtered signal $\Delta\varnothing'$ and uses the stored value to determine the sine and cosine replica signals provided by generators 46, 47 during the corresponding time slot of the next time frame.

Due to the provision of the low pass filter 53, the sine and cosine replica generators 46, 47 are controlled such that the signal $\Delta\varnothing'$ on the output of the arctan device 48 now represents the phase demodulated baseband signal directly, the filter 38 and integrator 39 of Figure 3 no longer being required.

The arrangement allows the demodulation of very short bursts of carrier frequency. Preferably, but not essentially, each burst of carrier comprises an integral number of cycles so as to eliminate the effect of the d.c. pedestal which would otherwise arise as a consequence of the heterodyning operation in the photodetector. If the carrier does comprise a non-integral number of cycles, then the effect of the d c pedestal can, if necessary, be eliminated by means known to those skilled in the art. The analogue/digital converter preferably, but not essentially, samples the carrier at a rate of 4N times the carrier frequency, where N is an integer. This provides signals spaced at intervals of

$\pi$ / 2N radians relative to the carrier frequency.

While the invention has been described with reference to the embodiments shown in the drawings, these are given by way of example only. The invention is not restricted to the specific arrangements shown therein, but encompasses alternative arrangements falling with the scope of the claims.

For example, while for convenience in explaining the operation of the invention, the embodiments have been described as a series of interconnected functional blocks, the invention may be equally well performed by functionally equivalent means such as a suitably programmed micro computer programmed to perform on digital signals at least some of the operations performed by the blocks shown in the drawings.

Also, while in the embodiments the sine signal is divided by the cosine signal to produce a tan signal, the cosine could alternatively be divided by the sine to produce a cotan signal, the arctan device then being replaced by an arc cotan device.

## Claims

1. Apparatus, for demodulating a time-division multiplexed angle modulated input signal which consists of a repetitive sequence of frames each of which comprises a plurality of time slots with corresponding slots in each frame being allocated to corresponding information-carrying signals, characterised in that:-

   an analogue/digital converter (35) is provided to convert the input signal into a series of digital signals representing respective instantaneous magnitudes of the input signal,

   a demodulator means (37) has an input connection (351) for receiving the series of digital signals and an output connection (371) for transmitting an output signal comprising a series of demodulated signals,

   the demodulator means (37) includes a reference signal means (46, 47) for generating a series of reference signals, and a feedback circuit (148, 149) interconnecting the output connection (371) and the reference signal means (46, 47), and

   a storage means (49), for storing the demodulated output signal during a given time slot and for applying this stored signal to the reference signal means (46, 47) during a corresponding subsequent time slot of a subsequent frame, is positioned in the feed back circuit (148, 149) whereby the application of this stored signal to the reference signal means (46, 47) will determine the reference signal generated by the reference signal means (46, 47) during the corresponding subsequent time slot.

2. Apparatus, as claimed in Claim 1, characterised in that the demodulator means (37) includes a quadrature demodulator means (41, 42), and the reference signal means (46, 47) is arranged to generate respective sine and cosine reference signals.

3. Apparatus, as in Claim 2, characterised in that the quadrature demodulator means (41, 42) includes a first path (141) containing a first multiplier (41) for multiplying the series of digital signals by the sine signal produced by the reference signal means (46) to produce a first intermediate signal, a second path (142) containing a second multiplier (42) for multiplying the series of digital signals by the cosine signal produced by the reference signal means (47) to produce a second intermediate signal, a divider (45) is arranged to divide one of the first and second intermediate signals by the other intermediate signal to produce a third intermediate signal, and a further means (48) is arranged to modify the third intermediate signal to produce the output signal.

4. Apparatus, as in Claim 3, characterised in that each of the first and second paths (141, 142) includes a respective filter (43, 44).

5. Apparatus, as in any preceding claim and in which the input signal is phase modulated, characterised in that the output connection (371) is connected to a high pass filter (38) and an integrator (39) such that the output signal from the demodulator means (37) will be filtered in the high pass filter (38) and the output of the high pass filter (38) will be integrated to produce a further demodulated output signal.

6. Apparatus, as in any of Claims 1 to 3, characterised in that the feedback circuit (148, 149) includes a low pass filter (53) arranged between the output connection (371) and the means (49) for storing the demodulated output signal.

7. Apparatus, as in Claim 1, characterised in that the demodulator means (37) comprises a microprocessor.

8. Apparatus, as in any preceding claim, characterised in that the analogue/digital converter (35) is arranged to sample the carrier at a rate of 4N times the carrier frequency, where N is an integer.

9. Apparatus, as in any preceding claim, characterised in that the analogue/digital converter (35) is connected to receive the input signal from an optical detector (14) which is arranged in known manner to detect light from an optical sensor array (10).

10. A method of demodulating a time-division multiplexed angle modulated input signal which consists of a repetitive sequence of frames each of which comprises a plurality of time slots with corresponding slots in each frame being allocated to corresponding information-carrying signals, characterised in that:-

the input signal is repetitively sampled to produce a series of digital signals representing respective instantaneous magnitudes of the input signal,

a series of reference signals is used to demodulate the series of digital signals to produce an output signal comprising a series of demodulated signals,

the output signal is applied to feedback means,

the demodulated signals are stored in the feedback means, and

the stored demodulated signals produced during a given time slot are used to produce the reference signal required for demodulation during the corresponding subsequent time slot.

11. A method, as in Claim 10, characterised in that the series of digital signals is demodulated by quadrature demodulation and the series of reference signals are produced as respective sine and cosine signals.

12. A method, as in Claim 11, characterised in that the quadrature demodulation is performed by:-

multiplying the series of digital signals by the sine signal to produce a first intermediate signal,

multiplying the series of digital signals by the cosine signal to produce a second intermediate signal,

dividing one of the first and second intermediate signals by the other of the first and second intermediate signals to produce a third intermediate signal, and

modifying the third intermediate signal to produce the output signal.

13. A method, as in Claim 12, characterise d in that the first and second intermediate signals are filtered before they are divided to produce the third intermediate signal.

14. A method, as in Claim 13, characterised in that the output signal is high pass filtered, and the filtered output signal is integrated to produce a further demodulated signal.

15. A method, as in Claim 11 or 12, characterised in that the demodulated series of digital signals are low pass filtered prior to being stored in the feedback means.

EP 0 472 383 A2

Fig. 1.

Fig. 2.

8

## Fig. 3.

## Fig. 4.

$A\ SIN\ \Delta\phi$

$A\ COS\ \Delta\phi$

$\Delta\phi$

Fig.5.